# FASCICULE DE BREVET EUROPEEN

(11) **EP 0 520 048 B1**
(45) Date de publication et mention de la délivrance du brevet: **05.10.1994**
(21) Numéro de dépôt: 92900302.8
(22) Date de dépôt: 17.12.1991
(51) Int. Cl.: B60T 13/74, B60T 17/02

(54) **DISPOSITIF DE COMMANDE DE FREINAGE ELECTRO-HYDRAULIQUE OU ELECTRO-PNEUMATIQUE POUR ESSIEUX DE REMORQUES AVEC FREINS MECANIQUES**
ELEKTROHYDRAULISCHE ODER ELEKTROPNEUMATISCHE BREMSREGELVORRICHTUNG FÜR ANHÄNGERACHSEN MIT HILFSKRAFTBREMSEN
ELECTROHYDRAULIC OR ELECTROPNEUMATIC BRAKING CONTROL DEVICE FOR TRAILER AXLES HAVING POWER BRAKES

(30) Priorité: 17.12.1990 CH 3995/90
(43) Date de publication de la demande: 30.12.1992
(73) Titulaire: ZBINDEN, Hugo, CH-1725 Posieux (CH)
(72) Inventeur: ZBINDEN, Otto, CH-1728 Rossens (CH)
(74) Mandataire: Fischer, Franz Josef
(86) Numéro de dépôt international: CH9100272
(87) Numéro de publication internationale: WO9211151

(56) Documents cités:
- EP-A- 0 363 827
- DE-A- 2 208 936
- DE-A- 3 133 102
- DE-A- 3 512 110
- US-A- 3 951 464
- US-A- 3 985 395

## Description

La présente invention concerne un dispositif de freinage à commande fluidique, généralement électro-hydraulique ou électro-pneumatique, destiné au freinage de remorques munies de freins mécaniques.

Divers systèmes de commande de freinage d'une remorque attelée à un véhicule tracteur sont connus depuis longtemps, en particulier le système dit à inertie, dont l'action est commandée par la décélération du véhicule tracteur, mais dont certaines législations interdisent l'emploi pour des remorques dont la charge dépasse une valeur fixée. Un autre système connu est celui dont la commande est pneumatique, nécessitant l'installation d'un compresseur sur le véhicule tracteur et le passage de conduites pneumatiques entre le véhicule tracteur et la remorque; si ce système est efficace, il est onéreux, peu pratique et relativement polluant dans la mesure où de l'air chargé de résidus d'huile et d'antigel est renvoyé dans l'air ambiant. En variante du système précédent, on peut rencontrer le système à dépression, la dépression nécessaire à la commande des freins de la remorque étant prélevée sur le moteur: ce système a un temps de réponse relativement long et comporte aussi des conduites pneumatiques peu pratiques entre le véhicule tracteur et la remorque. Dans l'agriculture où les tracteurs sont généralement équipés d'une centrale hydraulique, la commande de freinage de la remorque peut se faire hydrauliquement, une conduite hydraulique reliant le tracteur à la remorque. Un autre système de freinage connu est le système électrique, un signal électrique étant fourni à un électro-aimant disposé sur le flasque de frein, le faisant plaquer contre un disque entraîné par la roue de la remorque, ce mouvement d'entraînement actionne un excentrique commandant l'écartement des mâchoires disposées à l'intérieur du tambour de frein; ce système, s'il a l'avantage de ne pas nécessiter de conduite pneumatique ou hydraulique entre le véhicule tracteur et la remorque, mais uniquement une conduite électrique nettement plus pratique que les précédentes, présente les inconvénients que le réglage des forces de freinage entre les deux ou les quatre roues de la remorque est assez difficile et que l'efficacité de freinage dépend beaucoup de la température du disque.

La demande publiée DE-A-3.133.102 décrit un dispositif de freinage par lequel la commande entre le véhicule tracteur et la remorque se fait par des moyens électriques. Ce dispositif nécessite toutefois des moyens électroniques assez complexes afin de créer un signal électrique, non continu, fonction de l'action de freinage désirée, qui est comparé à un autre signal électrique représentant la pression hydraulique instantanée régnant à l'intérieur du circuit hydraulique de freinage. Le signal résultant de cette comparaison génère, par d'autres moyens électroniques, deux signaux agissant différentiellement sur deux soupapes du circuit hydraulique. A côté du fait que des moyens électroniques importants sont nécessaires dans ce dispositif, l'action différentielle sur deux soupapes différentes peut engendrer des effets de freinage indésirables en cas de déséquilibre entre les deux circuits de commande, respectivement entre les deux soupapes.

Un autre dispositif est décrit dans le brevet US-A-3.951.464 où la commande du circuit hydraulique est aussi obtenue par des moyens électriques. Dans ce cas, le signal électrique de commande de freinage agit directement sur un moteur commandant une pompe délivrant la pression d'huile nécessaire au freinage; cette configuration rend impossible une effet de freinage proportionnel à l'action demandée. D'autre part, afin de pouvoir avoir une action de freinage lorsque la remorque est décrochée, respectivement lorsque le câble de liaison est déconnecté, une batterie supplémentaire est nécessaire sur la remorque. Cet élément supplémentaire est onéreux et demande de l'entretien.

Le but de l'invention est donc de proposer un dispositif de freinage qui ne comporte pas les inconvénients mentionnés des systèmes de l'art antérieur et dont les avantages sont les suivants: élimination de toute conduite hydraulique ou pneumatique peu pratique entre le véhicule tracteur et la remorque, action de freinage immédiate, progressive et proportionnelle à l'effort exercé sur la pédale, possibilité de régler l'action de freinage selon la charge de la remorque, freinage automatique et immédiat de la remorque lors de la déconnexion du câble électrique de commande entre le véhicule tracteur et la remorque, possibilité de défreiner manuellement la remorque afin de la déplacer manuellement, élimination de tout rejet polluant dans l'atmosphère, efficacité de freinage indépendante de la température ou de freinages répétés. De plus le dispositif selon l'invention ne nécessite que des modification ou adaptations mineures et bon marché sur le véhicule tracteur, le dispositif installé sur la remorque pouvant être monté d'origine ou adapté à des remorques existantes de n'importe quelle charge utile, sans nécessiter l'installation d'une batterie sur la remorque. Pour la mise en oeuvre du dispositif de freinage selon l'invention, une soupape de sécurité commandant le freinage automatique en cas de déconnexion de la liaison électrique a été spécialement développée pour être intégrée à ce dispositif, la commande mécanique de cette soupape ne pouvant être actionnée lorsque la liaison électrique entre le véhicule tracteur et la remorque est établie.

Afin d'atteindre le but ci-dessus, le dispositif de freinage selon l'invention répond aux caractéristiques des revendications 1 à 13.

La description ci-dessous est à lire en relation avec le dessin en annexe comportant les figures où:
- la figure 1 représente un schéma de principe d'une forme d'exécution préférentielle d'un dispositif de freinage selon l'invention,
- la figure 2 représente un schéma de principe d'une autre forme d'exécution d'un dispositif de freinage selon l'invention, et
- les figures 3A, 3B, 3C et 3D représentent schématiquement quatre états de fonctionnement d'une soupape de sécurité.

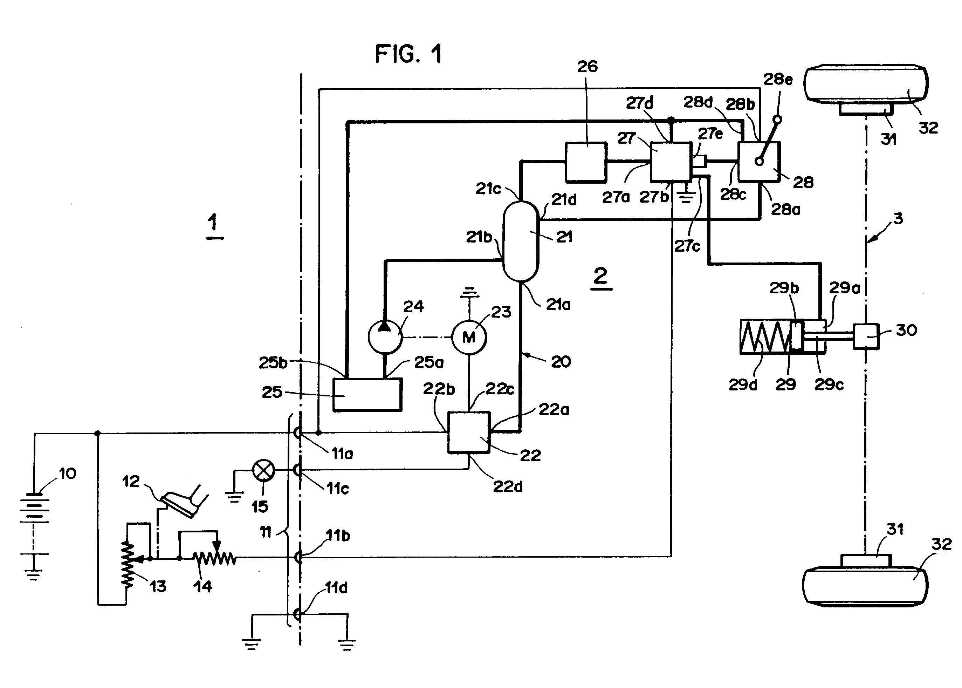

La partie gauche de la figure 1 (à gauche de la ligne verticale en traits mixtes), repérée par 1, représente schématiquement la partie du système de freinage montée sur le véhicule tracteur, alors que la partie droite de la figure (à droite de la ligne verticale en traits mixtes), repérée par 2, représente la partie du système de freinage montée sur la remorque et comprenant une forme d'exécution préférentielle du dispositif selon l'invention.

Considérons tout d'abord le cas où la remorque est attelée au véhicule tracteur et que les liaisons électriques représentées sur la figure sont établies entre le véhicule tracteur et la remorque par la prise de liaison 11 comprenant les contacts 11a, 11b, 11c et 11d. Il est à remarquer que cette liaison 11 est la seule liaison propre au système de freinage entre le véhicule tracteur et la remorque. Le circuit hydraulique 20, comprend tout d'abord un accumulateur de pression 21, relié par sa sortie 21a directement à l'entrée hydraulique 22a d'un pressostat 22. Lorsque la pression hydraulique dans l'accumulateur de pression 21 descend au-dessous d'une première valeur minimum, (par exemple environ 40 bar) le pressostat 22 ferme un contact entre ses bornes 22b et 22c, ce qui amène la tension fournie par la source de tension/courant 10 aux bornes du moteur électrique 23, par l'intermédiaire de la borne 11a de la prise de liaison 11. La source de tension/courant 10 peut être de n'importe quel type compatible avec les divers éléments et composants du circuit électrique du véhicule et du dispositif de freinage, par exemple une batterie de 12 V ou 24 V ou alors il peut s'agir de n'importe quel type de dispositif susceptible de fournir une tension et un courant convenable. Le moteur électrique 23 actionne directement une pompe hydraulique 24 qui lui est accouplée, ladite pompe 24 pompant l'huile contenue dans un réservoir d'huile 25 via la sortie 25a, vers l'entrée 21b de l'accumulateur de pression 21, afin d'élever la pression hydraulique dans ledit accumulateur de pression. Lorsque la pression à l'intérieur de l'accumulateur de pression 21 a atteint une valeur déterminée (par exemple environ 120 bar), le pressostat 22 ouvre son contact 22b-22c interrompant ainsi l'alimentation du moteur 23 et par conséquent le fonctionnement de la pompe 24. La sortie 21c de l'accumulateur de pression est suivie d'une soupape de limitation de pression 26 chargée de limiter la pression du circuit hydraulique avant une soupape de commande 27, de manière à ce que l'entrée 27a de ladite soupape de commande soit toujours à la même pression hydraulique. Lorsque le conducteur du véhicule tracteur désire freiner, il presse sur la pédale de frein 12 du véhicule, une résistance variable 13 étant reliée au maître-cylindre (non représenté) du circuit de freinage du véhicule tracteur. Le circuit de freinage propre au véhicule tracteur ne faisant pas partie de la présente invention, n'est pas représenté sur la figure, en dehors de la pédale de frein 12. En actionnant la résistance variable 13, de manière à diminuer sa valeur, un courant peut s'établir à partir de la batterie 10, vers la borne 27b de la soupape de commande 27, en passant par la borne 11b de la prise de liaison 11. Cette soupape de commande est une soupape de pression à effet proportionnel, c'est-à-dire que son ouverture est proportionnelle au courant qu'elle reçoit. En d'autres termes, la pression de l'huile à la sortie 27c, respectivement la quantité d'huile sortant par la sortie 27c de la soupape de commande 27 est proportionnelle au courant qui lui est envoyé sur la borne 27b. L'huile sortant par la sortie 27c pénètre dans la chambre 29a d'un vérin hydraulique 29. La pression hydraulique agit alors sur le piston 29b qui, par l'intermédiaire de la tige de piston 29c, actionne alors le mécanisme mécanique de freinage 3, schématisé par une transmission 30 agissant sur les mâchoires de deux tambours de freins 31 disposés dans les roues 32. Lors de son déplacement, le piston 29b comprime le ressort 29d. Ainsi, une faible pression sur la pédale 12, entraîne une faible diminution de la résistance 13, la batterie 10 ne fournit alors qu'un faible courant à la soupape de commande 27, qui ne s'ouvre que d'une faible valeur, provoquant une faible augmentation de pression, respectivement ne laissant passer qu'un faible volume d'huile entraînant ainsi un faible déplacement du piston 29b et par conséquent une faible action de freinage sur les roues 32. Par contre, lorsque la pression sur la pédale 12 est forte, la résistance variable 13 est amenée à sa valeur minimum ce qui permet à la batterie 10 de fournir une valeur maximum de courant à la soupape de commande 27, qui, s'ouvrant au maximum, augmente la pression d'une quantité importante, respectivement permet l'écoulement d'une quantité importante d'huile depuis l'accumulateur de pression 21 vers le vérin hydraulique 29, produisant alors un fort effet de freinage. Ainsi, l'action de freinage sur les roues 32 de la remorque est progressive et proportionnelle à la pression appliquée par le conducteur sur la pédale de frein 12 du véhicule tracteur. Lorsque la pression sur la pédale 12 cesse, la résistance 13 ne laisse plus passer de courant, la soupape de commande 27 ferme son passage entre les orifices 27a et 27c et relie 27c à 27d, de manière à ce que l'huile en excès provenant de la chambre 29a, pressée par le ressort 29d contre le piston 29b, puisse s'écouler en direction de l'entrée 25b du réservoir d'huile 25.

Comme il a été dit précédemment, l'action de freinage sur les roues 32 est proportionnelle à la valeur du courant alimentant la soupape de commande 27; vu d'autre part que l'action de freinage nécessaire dépend essentiellement de la charge que doit transporter la remorque, la résistance variable 14 permet de doser l'action de freinage en fonction de la charge de la remorque. Par exemple lorsque la remorque est à vide, la résistance variable 14 sera réglée sur une valeur élevée de résistance, laissant ainsi passer un courant relativement faible, quelle que soit la pression appliquée sur la pédale 12; par contre lorsque la remorque est chargée au maximum, la valeur de la résistance 14 est réglée au minimum, laissant passer un courant maximum, ce qui entraîne une action de freinage maximum lorsque le conducteur agit énergiquement sur la pédale de frein 12. La résistance variable 14 peut être placée sur le véhicule tracteur comme représenté sur la figure ou alors sur la remorque. Le cadran entourant le bouton de réglage de la résistance 14 peut être gradué en unités de charge de la remorque.

En cas de fuite au circuit d'huile 20 ou de mauvais fonctionnement du moteur électrique 23 ou de la pompe hydraulique 24 entraînant une baisse de pression hydraulique dans l'accumulateur de pression 21, le pressostat possède un second contact reliant les bornes 22b à 22d lorsque la pression de l'accumulateur de pression 21 diminue jusqu'à une seconde valeur minimum (par exemple environ 30 bar), inférieure à la première valeur minimum vue plus haut. Ainsi un circuit d'alarme, pouvant être une lampe témoin 15 montée sur le tableau de bord, est alimenté par la batterie 10, via le contact 22b-22d du pressostat 22 et les bornes 11a et 11c de la prise de liaison 11, et signale que la pression hydraulique dans l'accumulateur de pression est tombée à une valeur minimum et que le dispositif de freinage de la remorque est défectueux. La valeur minimum de la pression à laquelle cette alarme est déclenchée doit être néanmoins suffisante pour assurer encore quelques actions de freinage de la remorque à l'aide de la pression restante. Le circuit d'alarme a été représenté par une lampe témoin 15, mais il peut comprendre, à la place ou en plus de ladite lampe, tout autre moyen d'alarme, par exemple une alarme acoustique.

La borne 11d de la prise de liaison 11 reliant les deux masses du véhicule et de la remorque est représentée pour la bonne compréhension du schéma électrique du dispositif.

Ainsi, lorsque la remorque est attelée au véhicule tracteur et que la prise de liaison 11 est connectée, on a une mise sous pression automatique du circuit hydraulique 20, une alarme en cas de mauvais fonctionnement et une commande de freinage de la remorque proportionnelle à l'action appliquée sur la pédale de frein 12 du véhicule tracteur, ainsi qu'un réglage possible de l'action de freinage en fonction de la charge de la remorque.

En cas d'actionnement du frein à main du véhicule tracteur, une commande (non représentée) semblable à celle décrite précédemment pour la pédale de frein, agit de manière similaire afin de freiner la remorque.

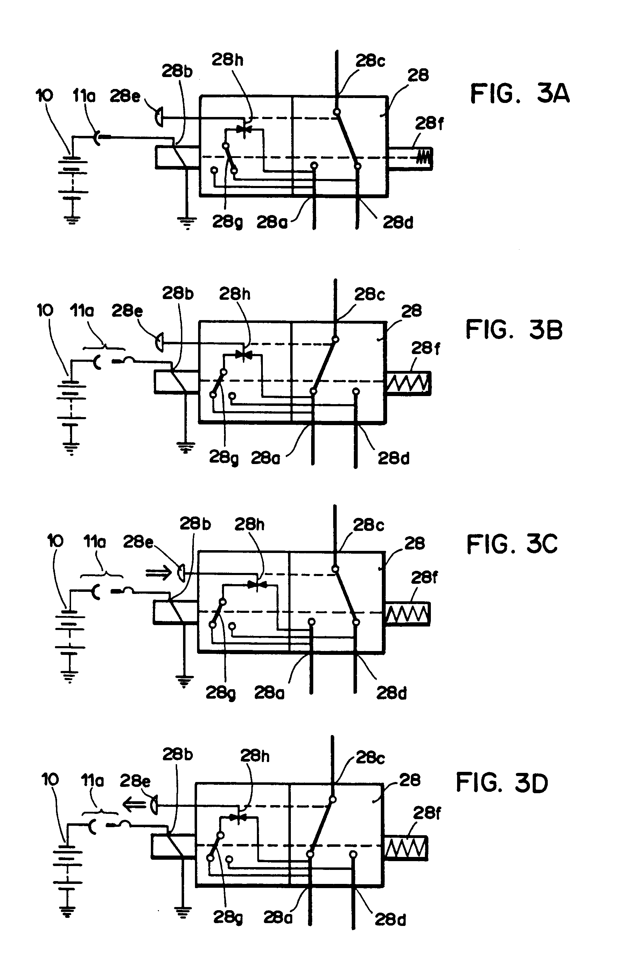

La soupape de sécurité 28 permet de contrôler le freinage de la remorque en cas de découplage de celle-ci du véhicule tracteur, que ce découplage soit volontaire ou non, entraînant une déconnexion de la prise de liaison 11 faisant que la remorque n'est alors plus alimentée en tension ou en courant électrique. Elle n'est décrite en regard de cette figure ainsi que de la suivante uniquement au point de vue fonctionnement et intégration au dispositif de freinage; une description plus complète en sera faite en regard des figures 3A, 3B et 3C.

Lorsque la borne 27b n'est plus alimentée électriquement, la soupape de commande 27 se ferme au cas où elle était précédemment ouverte ou reste fermée, ce qui l'empêche de commander le freinage. La soupape de sécurité 28, qui elle aussi n'est plus alimentée électriquement via sa borne 28b commute afin d'ouvrir un passage entre l'entrée 28a et la sortie 28c afin d'alimenter, par la pression hydraulique de l'accumulateur de pression 21, via sa sortie 21d, un piston auxiliaire 27e disposé sur la soupape de commande 27 et commandant une ouverture complète de la liaison 27a-27c, établissant ainsi la pression hydraulique maximum de freinage dans le vérin hydraulique 29, ce qui correspond au freinage de secours. L'ouverture de la soupape de commande 27 peut donc être commandée de deux manières différentes, tout d'abord proportionnellement par l'action d'un courant ou d'une tension électrique agissant par la borne 27b d'une bobine ainsi que par l'action du piston auxiliaire 27e agissant par tout ou rien sur l'ouverture de cette soupape de commande 27. Ces deux commandes sont indépendantes et découplées l'une de l'autre, la commande par le piston auxiliaire 27 n'étant efficace que si la commande par la bobine est inhibée par défaut d'alimentation.

Vu que la soupape de sécurité 28 comporte une commande d'ouverture/fermeture manuelle 28e, il est possible manuellement de faire commuter ladite soupape afin de défreiner la remorque, laissant s'échapper l'huile via la sortie 28d de la soupape 28, respectivement 27d de la soupape 27, vers le réservoir 25, afin de manoeuvrer la remorque à la main; en actionnant à nouveau la commande manuelle 28e, il est possible d'actionner à nouveau le freinage de la remorgue et ceci un certain nombre de fois, tant que la pression contenue dans l'accumulateur de pression 21 est suffisante.

Ainsi une déconnexion de la prise de liaison 11 entraîne un freinage énergique de la remorque, cette déconnexion pouvant se produire suite à une rupture de l'attelage ou alors lorsqu'on désire parquer la remorque indépendamment du véhicule tracteur par exemple. Après déconnexion de la prise de liaison 11, il est toujours possible de freiner ou défreiner la remorque par action sur la commande manuelle 28e.

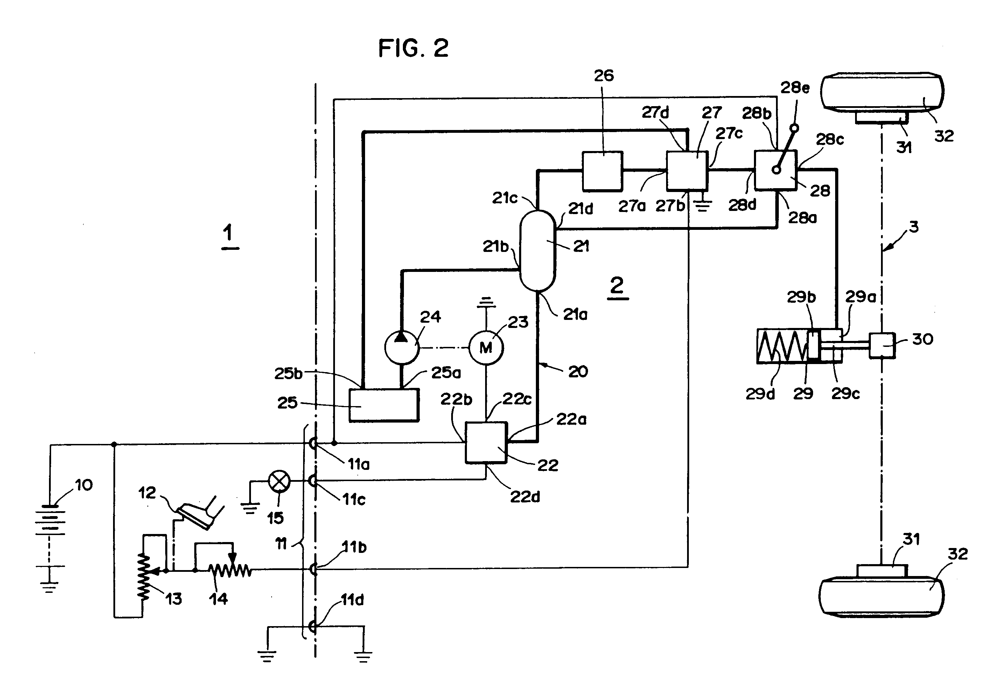

Une autre forme d'exécution d'un dispositif de freinage selon l'invention est représenté à la figure 2, la différence par rapport à la forme d'exécution précédente résidant dans la disposition relative de la soupape de sécurité 28 par rapport à la soupape de commande 27. Dans ce cas, la soupape de sécurité 28 est disposée dans le circuit hydraulique principal, entre la soupape de commande 27 et le vérin hydraulique 29. Lorsque la bobine, respectivement la borne 28b est alimentée, le passage est établi entre l'entrée 28d et la sortie 28c de la soupape de sécurité 28, permettant à la soupape de commande 27 d'agir proportionnellement sur le vérin hydraulique 29. En cas de rupture de l'alimentation électrique et de fermeture de la soupape de commande 27, la liaison 28d-28c se ferme aussi, une nouvelle liaison entre l'entrée 28a et la sortie 28c étant établie afin d'alimenter directement le vérin hydraulique 29 par la pression de l'accumulateur de pression 21, établissant ainsi un freinage d'urgence. Comme précédemment, il est possible de défreiner manuellement la remorque en agissant sur la manette 28e, ce qui coupe la liaison 28a-28c, et rétablit la liaison 28c-28d permettant à l'huile contenue dans le vérin 29 de s'échapper et de retourner au réservoir 25 par le passage 27c-27d.

Les figures 3A, 3B, 3C et 3D montrent avec davantage de détails la soupape de sécurité 28 selon quatre états de fonctionnement. A la figure 3A, la remorque est attelée au véhicule tracteur, respectivement la borne 28b alimentant la bobine de la soupape est sous tension, par la batterie 10 et via la prise 11a. De ce fait, le passage entre l'entrée 28a et la sortie 28c est ouvert, c'est-à-dire interrompu, alors que celui entre l'entrée 28c et la sortie 28d est fermé, c'est-à-dire autorisé. La mise sous tension de la bobine comprime le ressort 28f. De plus, cet état de fonctionnement de la bobine fait commuter la soupape auxiliaire 28g, comme indiqué sur la figure 3A, de manière à ce que la pression agissant d'un côté d'un dispositif mécanique 28h relié à à la tige de commande 28e soit inférieure à celle agissant de l'autre côté du même dispositif. Dans ce cas, le premier côté du dispositif 28h est soumis à la pression qui règne dans le passage 28c-28d et qui est toujours inférieure à la pression appliquée au second côté du dispositif 28h et qui est égale à la pression de sortie de l'accumulateur de pression 21. Même dans le cas du deuxième mode d'exécution du dispositif décrit précédemment la pression maximum pouvant survenir dans le passage 28c-28d sera toujours inférieure à celle de sortie de l'accumulateur 21, de par la présence du limiteur de pression 26 sur le circuit. Vu le déséquilibre des pressions entre les deux côtés du dispositif 28h, il n'est pas possible de manoeuvrer la commande 28e, rendant ainsi impossible une manoeuvre manuelle intempestive. Ainsi, lorsque la borne 28b est alimentée électriquement, le passage hydraulique est établi entre 28c et 28d, ce qui rend inactif le piston auxiliaire 27e de la figure 1 correspondant à la première forme d'exécution ou assure le passage d'huile du circuit principal de freinage selon la deuxième forme d'exécution de la figure 2. De plus, le passage entre 28a et 28c est interrompu, faisant que la soupape de sécurité 28 est inactive pour commander le freinage dans cet état de fonctionnement pour les deux modes d'exécution. Vu que ce mode de fonctionnement correspond à celui où le freinage est commandé par la soupape de commande 27, il ne doit pas être possible de commander un freinage par le dispositif mécanique 28e, ce qui est assuré comme décrit plus haut.

Sur la figure 3B, la prise 11a est ouverte faisant que la borne 28b n'est plus alimentée, et le freinage d'urgence est commandé, de par l'action du ressort 28f, par la fermeture de la liaison 28a-28c, ce qui dans le premier mode d'exécution permet l'alimentation du piston auxiliaire 27e par la pression de l'accumulateur de pression 21, et dans le deuxième mode d'exécution permet l'alimentation directe du vérin hydraulique 29 par l'accumulateur de pression 21. De plus la soupape auxiliaire 28g a basculé, amenant une pression identique des deux côtés du dispositif 28h, ce qui permet la manoeuvre manuelle du levier 28e, comme on le voit aux figures 3C et 3D.

La maneuvre du levier 28e, comme représenté par la flèche sur la figure 3C permet de manoeuvrer uniquement la soupape principale, interrompant la liaison 28a-28c, ce qui défreine la remorque et établissant la liaison 28d-28c, ce qui permet l'échappement d'huile vers le réservoir 25. En manoeuvrant à nouveau le levier 28e comme représenté par la flèche sur la figure 3D, on freine à nouveau la remorque. Ainsi, on voit que lorsque la bobine n'est pas alimentée électriquement, il est possible de manoeuvrer le levier 28e, dans un sens ou dans l'autre, afin de défreiner, respectivement freiner la remorque.

Ainsi la soupape de sécurité, comportant une commande électrique et une commande mécanique et dont la commande mécanique peut être inhibée par une pression qui lui est appliquée ou mise en état d'être activée par une contre pression, peut avantageusement être introduite dans le circuit hydraulique d'un dispositif de freinage selon l'une ou l'autre des formes d'exécution prévues.

Le réglage fin du freinage sur chaque roue se fait mécaniquement sur chaque tambour de frein selon le type de tambour de frein monté sur chaque roue.

Ce dispositif de freinage selon l'invention est de préférence doublé d'un dispositif de freinage indépendant à commande mécanique connu de la technique et propre à la remorque (non représenté), actionnant directement la transmission mécanique 30, afin que lorsque la remorque stationne un certain temps, l'action de freinage ne soit pas provoquée par la pression hydraulique dans la chambre 29a du vérin 29.

Le schéma hydraulique du circuit de freinage a été représenté pour les deux modes d'exécution de manière simplifiée, il peut aussi comprendre un ou plusieurs éléments complémentaires non représentés, comme par exemple un ou plusieurs limiteurs de surpression disposés aux endroits adéquats afin de rendre le freinage d'urgence moins brutal.

Chacune des deux formes d'exécution a été décrite se rapportant à une commande hydraulique, il est bien entendu qu'il s'agit plus généralement d'une commande fluidique pouvant aussi être par exemple une commande pneumatique effectuant les mêmes fonctions, la pompe hydraulique étant remplacée par un compresseur, les soupapes hydrauliques devenant des soupapes pneumatiques. Selon encore une autre forme d'exécution de l'invention, la commande hydraulique ou pneumatique de freinage peut être négative au lieu de positive comme décrit plus haut, c'est-à-dire que l'action de freinage n'est plus commandée par une pression dans la chambre du vérin alors que le défreinage est commandé par le ressort antagoniste, mais le freinage peut être commandé par le ressort, la pression dans la chambre du vérin s'opposant audit freinage; dans ce cas certaines modifications doivent être apportées au circuit hydraulique ou pneumatique, en particulier l'action de la soupape de commande ainsi que de la soupape de sécurité sont inversées par rapport à ce qui a été décrit précédemment.

Selon encore une autre forme d'exécution, au cas où le véhicule tracteur est déjà équipé d'une centrale hydraulique ou pneumatique, il est possible de supprimer le moteur et la pompe prévus sur la remorque, l'accumulateur de pression étant directement alimenté par ladite centrale du véhicule tracteur par une conduite appropriée.

Diverses variantes du dispositif de freinage selon les diverses formes d'exécution de l'invention décrites ci-dessus peuvent être envisagées, en particulier le dispositif a été décrit et représenté appliqué à une remorque à un seul essieu mais il est bien entendu que ledit dispositif s'applique tout aussi bien à une remorque comportant plusieurs essieux, le vérin hydraulique ou pneumatique pouvant alors être unique, la transmission de la commande de freinage entre les essieux se faisant mécaniquement ou alors chaque essieu peut comporter son propre vérin hydraulique ou pneumatique, lesdits vérins étant montés en parallèle sur le circuit hydraulique ou pneumatique, les dimensions de chacun des vérins étant choisies selon l'effort de freinage à appliquer à l'essieu en question. De même, la commande de chaque tambour de frein peut comporter son propre vérin commandant directement l'écartement des mâchoires, tous lesdits vérins étant montés en parallèle. La commande électrique du dispositif de freinage, commande ne faisant pas partie de l'inventiona été décrite et représentée d'une manière simplifiée; d'autres systèmes, comprenant en particulier des boîtiers de commande ou des relais adéquats, peuvent être prévus, à condition que les effets provoqués soient semblables à ceux décrits. De même, dans certains cas, il peut être avantageux que la liaison de commande entre le véhicule tracteur et la remorque ne soit pas assurée par une liaison galvanique mais par une liaison par ondes hertziennes électromagnétiques établie entre deux antennes ou un émetteur et un récepteur.

Le dispositif de freinage selon l'invention. à commande électrique et à effet hydraulique ou pneumatique et mécanique est donc de fonctionnement très fiable, l'effet de la pression sur la pédale de frein sur l'action de freinage de la remorque est absolument proportionnel et réglable en fonction de la charge, la sécurité de freinage en cas de rupture de l'attelage est garantie. Ce dispositif de freinage selon l'invention peut être monté d'origine sur une remorque ou alors facilement installé après coup, le coût d'installation étant relativement modique par rapport à un dispositif plus conventionnel. Le faible coût d'installation provient essentiellement des faibles transformations ou adaptations nécessaires au véhicule tracteur; en particulier les véhicules tracteurs déjà équipés pour un dispositif de freinage électrique de la remorque ne nécessiteront que très peu d'adaptations.

Le dispositif de freinage selon l'invention peut être installé sur tous types de remorques, tractées par des véhicules de n'importe quel type, sans limitation de la charge utile; il s'adapte aussi bien sur les freins à tambours que sur les freins à disques ainsi que sur ceux munis d'un système antibloquant de type ABS ou autre.

Le dispositif de freinage selon l'invention peut être avantageusement équipé d'une soupape de sécurité afin d'empêcher une manoeuvre manuelle intempestive du dispositif de freinage.

## Revendications

1. Dispositif de freinage d'une remorque attelée à un véhicule tracteur,
- ledit véhicule tracteur comportant des moyens délivrant un signal électrique de commande de freinage,
- ladite remorque comportant des moyens fluidiques d'actionnement de freins mécaniques comprenant en particulier:
- un moteur électrique (23) entraînant des moyens (24) de mise sous pression d'un accumulateur de pression (21) alimentant un circuit de commande fluidique (20),
caractérisé en ce que ledit circuit de commande fluidique comprend:
- une soupape de limitation de pression (26),
- une soupape de commande (27),
- une soupape de sécurité (28),
lesdites soupapes commandant:
- un vérin de freinage (29) actionnant les freins (31) de ladite remorque,
ledit signal électrique de commande de freinage agissant sur la soupape de commande.

2. Dispositif de freinage selon la revendication 1, caractérisé en ce que ledit signal électrique de commande est proportionnel à l'action de freinage désirée, et en ce que l'ouverture de la soupape de commande est proportionnelle audit signal électrique.

3. Dispositif de freinage selon la revendication 1, caractérisé en ce qu'un pressostat (22) disposé sur ledit accumulateur de pression commande la mise en marche dudit moteur entraînant lesdits moyens de mise sous pression, lorsque ledit pressostat mesure une première pression minimum.

4. Dispositif de freinage selon la revendication 3, caractérisé en ce que ledit pressostat actionne une alarme (15) située sur le véhicule tracteur lorsque ledit pressostat mesure une seconde pression inférieure à ladite première pression minimum.

5. Dispositif de freinage selon la revendication 2, caractérisé en ce que lesdits moyens de commande de freinage comportent des moyens de réglage (14) du signal, ajustables selon la charge de la remorque.

6. Dispositif de freinage selon la revendication 2, caractérisé en ce qu'une déconnexion de la liaison électrique (11) entre le véhicule tracteur et la remorque fait commuter ladite soupape de sécurité, afin de mettre en communication directe ledit réservoir de pression avec ledit vérin de freinage.

7. Dispositif de freinage selon la revendication 6, caractérisé en ce que ladite soupape de sécurité est commandable manuellement (28e) afin de défreiner la remorque.

8. Dispositif de freinage selon la revendication 7, caractérisé en ce que ladite soupape de sécurité (28) comporte une commande électrique (28b) et une commande mécanique (28e), l'actionnement de la commande mécanique étant inhibé par une pression de fluide agissant sur elle selon une première direction lorsque la commande électrique se trouve dans un premier état, l'actionnement de la commande mécanique étant possible par une contre-pression de fluide agissant sur elle selon une seconde direction opposée à la première lorsque la commande électrique se trouve dans un autre état.

9. Dispositif de freinage selon la revendication 2, caractérisé en ce que ledit signal électrique de commande est un signal électromagnétique, transmis du véhicule tracteur à la remorque par voie hertzienne.

10. Dispositif de freinage selon la revendication 2, caractérisé en ce que les freins de la remorque sont aussi commandés par l'actionnement du frein à main du véhicule tracteur.

11. Dispositif de freinage selon la revendication 1, caractérisé en ce que ledit vérin actionnant les freins est à commande de pression positive.

12. Dispositif de freinage selon la revendication 1, caractérisé en ce que ledit vérin actionnant les freins est à commande de pression négative.

13. Dispositif de freinage selon l'une des revendications 11 ou 12, caractérisé en ce qu'il s'applique à des freins à tambour ou à des freins à disque, munis ou non d'un système antibloquant.

## Claims

1. Device for braking a trailer attached to a tractor vehicle,
- said tractor vehicle comprising means supplying an electric braking-control signal,
- said trailer having fluid means for actuating mechanical brakes comprising in particular:
an electric motor (23) driving means (24) for putting under pressure a pressure accumulator (21) feeding a fluid control circuit (20),
characterized in that the said fluid control circuit comprises:
- a pressure-limiting valve (26),
- a control valve (27),
- a safety valve (28),
the said valves controlling:
- a braking jack (29) actuating the brakes (31) of said trailer,
said electric braking-control signal acting upon the control valve.

2. Braking device according to claim 1, characterized in that the said electric braking-control signal is proportional to the desired braking action, and in that the opening of the control valve is proportional to said electric signal.

3. Braking device according to claim 1, characterized in that a pressostat (22) disposed on said pressure accumulator controls the starting-up of said motor driving said means for putting under pressure when said pressostat measures a first minimum pressure.

4. Braking device according to claim 3, characterized in that said pressostat actuates an alarm (15) situated on the tractor vehicle when said pressostat measures a second pressure lower than said first minimum pressure.

5. Braking device according to claim 2, characterized in that said braking-control means comprise means for regulating (14) the signal, adjustable according to the load of the trailer.

6. Braking device according to claim 2, characterized in that a disconnection of the electrical connection (11) between the tractor vehicle and the trailer causes said safety valve to switch in order to put said pressure reservoir in direct communication with said braking jack.

7. Braking device according to claim 6, characterized in that said safety valve is controllable manually (28e) in order to unbrake the trailer.

8. Braking device according to claim 7, characterized in that said safety valve (28) comprises an electrical control (28b) and a mechanical control (28e), the actuation of the mechanical control being inhibited by a fluid pressure acting upon it along a first direction when the electrical control is in a first state, the actuation of the mechanical control being possible by a fluid counterpressure acting upon it along a second direction opposite to the first one when the electrical control is in another state.

9. Braking device according to claim 2, characterized in that said electric control signal is an electromagnetic signal transmitted from the tractor vehicle to the trailer via radio channel.

10. Braking device according to claim 2, characterized in that the brakes of the trailer are also controlled by the actuation of the hand brake of the tractor vehicle.

11. Braking device according to claim 1, characterized in that said jack actuating the brakes has a positive pressure control.

12. Braking device according to claim 1, characterized in that said jack actuating the brakes has a negative pressure control.

13. Braking device according to one of the claims 11 or 12, characterized in that it applies to drum brakes or to disk brakes, provided with an anti-blocking system or not.

## Patentansprüche

1. Bremsvorrichtung an einem an ein Zugfahrzeug angekoppelten Anhänger, wobei das Zugfahrzeug Mittel zum Bereitstellen eines elektrischen Bremssteuersignales aufweist und wobei der Anhänger Fluidikmittel zum Betätigen von mechanischen Bremsen aufweist, insbesondere einen Elektromotor (23), welcher Mittel (24) zum Unterdrucksetzen eines Druckspeichers (21) antreibt, wobei der letztere einen Fluidiksteuerkreis (20) speist, dadurch gekennzeichnet, dass der Fluidiksteuerkreis ein Druckbegrenzungsventil (26), ein Steuerventil (27) sowie ein Sicherheitsventil (28) umfasst, wobei die genannten Ventile einen Bremszylinder (29), der die Bremsen (31) des Anhängers betätigt, steuern, und wobei das elektrische Bremssteuersignal auf das Steuerventil wirkt.

2. Bremsvorrichtung nach Anspruch 1, dadurch gekennzeichnet, dass das elektrische Steuersignal proportional zur gewünschten Bremsbetätigung ist, und dass die Öffnung des Steuerventiles proportional zum elektrischen Signal ist.

3. Bremsvorrichtung nach Anspruch 1, dadurch gekennzeichnet, dass ein Druckregler (22), der am Druckspeicher angeordnet ist, das Einschalten des Motors, der die Mittel zum Unterdrucksetzen des Druckspeichers antreibt, steuert, sobald der Druckregler ein erstes Druckminimum feststellt.

4. Bremsvorrichtung nach Anspruch 3, dadurch gekennzeichnet, dass der Druckregler einen Alarm (15), der auf dem Zugfahrzeug angeordnet ist, auslöst, wenn der Druckregler einen zweiten Druck unterhalb des ersten Druckminimums feststellt.

5. Bremsvorrichtung nach Anspruch 2, dadurch gekennzeichnet, dass die Bremssteuermittel Mittel (14) zum Regeln des Signales umfassen, welche Mittel entsprechend der Ladung des Anhängers einstellbar sind.

6. Bremsvorrichtung nach Anspruch 2, dadurch gekennzeichnet, dass eine Unterbrechung der elektrischen Verbindung (11) zwischen dem Zugfahrzeug und dem Anhänger zum Schalten des Sicherheitsventiles führt, um auf diese Weise eine direkte Verbindung des Druckspeichers mit dem Bremszylinder herzustellen.

7. Bremsvorrichtung nach Anspruch 6, dadurch gekennzeichnet, dass das Sicherheitsventil manuell betätigbar (28e) ist, um die Bremsen des Anhängers zu lösen.

8. Bremsvorrichtung nach Anspruch 7, dadurch gekennzeichnet, dass das Sicherheitsventil (28) eine elektrische Steuerung (28b) und eine mechanische Steuerung (28e) umfasst, wobei das Betätigen der mechanischen Steuerung durch einen in einer ersten Richtung auf sie wirkenden Flüssigkeitsdruck gehemmt ist, wenn sich die elektrische Steuerung in einem ersten Zustand befindet und wobei die Betätigung der mechanischen Steuerung durch einen in einer zweiten der ersten Richtung entgegengesetzten Richtung auf sie wirkenden Flüssigkeitsdruck möglich ist, wenn sich die elektrische Steuerung in einem anderen Zustand befindet.

9. Bremsvorrichtung nach Anspruch 2, dadurch gekennzeichnet, dass das elektrische Steuersignal ein elektromagnetisches Signal ist, das per Funk vom Zugfahrzeug zum Anhänger übermittelt wird.

10. Bremsvorrichtung nach Anspruch 2, dadurch gekennzeichnet, dass die Bremsen des Anhängers ebenfalls durch das Betätigen der Handbremse des Zugfahrzeuges gesteuert sind.

11. Bremsvorrichtung nach Anspruch 1, dadurch gekennzeichnet, dass der die Bremsen beaufschlagende Zylinder mit einer Druckzunahme gesteuert ist.

12. Bremsvorrichtung nach Anspruch 1, dadurch gekennzeichnet, dass der die Bremsen beaufschlagende Zylinder mit einer Druckabnahme gesteuert ist.

13. Bremsvorrichtung nach Anspruch 11 oder 12, dadurch gekennzeichnet, dass sie sowohl auf Trommelbremsen als auch auf Scheibenbremsen, die mit oder ohne einem Antiblockiersystem ausgerüstet sind, anwendbar ist.
